# EUROPÄISCHE PATENTSCHRIFT

(11) **EP 1 467 894 B1**
(45) Veröffentlichungstag und Bekanntmachung des Hinweises auf die Patenterteilung: **21.03.2007**
(21) Anmeldenummer: 02782760.9
(22) Anmeldetag: 05.11.2002
(51) Int. Cl.: B60R 21/00, B60R 21/01

(54) **VORRICHTUNG ZUR INSASSENKLASSIFIZIERUNG UND VERFAHREN ZUR INSASSENKLASSIFIZIERUNG**
DEVICE FOR OCCUPANT CLASSIFICATION AND METHOD FOR OCCUPANT CLASSIFICATION
DISPOSITIF ET PROCEDE DE CLASSIFICATION D'OCCUPANTS

(30) Priorität: 22.12.2001 DE 10163910
(43) Veröffentlichungstag der Anmeldung: 20.10.2004
(73) Patentinhaber: ROBERT BOSCH GMBH, 70442 Stuttgart (DE)
(72) Erfinder: SCHMIED, Martin, 71642 Neckarweihingen (DE); MACK, Frank, 70376 Stuttgart (DE)
(86) Internationale Anmeldenummer: PCT/DE2002/004095
(87) Internationale Veröffentlichungsnummer: WO 2003/055724

(56) Entgegenhaltungen:
- EP-A- 0 878 356
- US-A1- 2001 029 416

## Beschreibung

### Stand der Technik

Die Erfindung geht aus von einer Vorrichtung zur Insassenklassifizierung beziehungsweise einem Verfahren zur Insassenklassifizierung nach der Gattung der unabhängigen Patentansprüche.

Eine gattungsgemäße Vorrichtung ist aus der US 2001/0029410 bekannt.

### Vorteile der Erfindung

Die erfindungsgemäße Vorrichtung beziehungsweise das erfindungsgemäße Verfahren zur Insassenklassifizierung haben den Vorteil, dass durch die Erfassung des Einsteigevorgangs eine Unterscheidung zwischen Kindersitzen und erwachsenen Personen durchgeführt werden kann, die völlig unabhängig von der Sitzposition der Person oder der Position des Kindersitzes ist. Des weiteren ist das neue System unabhängig von der Verwendung von Sitzunterlagen, Rückenlehnenneigung, Sitztiefenverstellung, Sitzkissenneigung und auch Alterungsprozesse des Sitzes haben keinen Einfluß.

Vorteilhafte Ausgestaltungen und Weiterbildungen sind in den abhängigen Ansprüchen enthalten.

Besonders vorteilhaft ist, dass der bildgebende Sensor als Video- und/oder als Ultraschall- und/oder Infrarot- und/oder Mikrowellensensor ausgebildet ist. Es können auch Kombinationen dieser unterschiedlichen Technologien verwendet werden. Dabei weist jeder Sensor eine Sende- und eine Empfangsvorrichtung auf.

Weiterhin ist es von Vorteil, dass der Bereich in wenigstens zwei Zonen aufgeteilt ist, die der bildgebende Sensor jeweils überwacht. Der bildgebende Sensor kann dafür entweder verschiedene Sensorelemente oder entsprechende Optiken aufweisen, die ihm das Überwachen der verschiedenen Zonen ermöglicht. Durch die Zonenbildung ist insbesondere die Ermittlung der zeitlichen Abfolge einer Bewegung möglich. Damit ist es insbesondere möglich, zu entscheiden, ob ein Objekt in das Fahrzeug ein- oder aus dem Fahrzeug heraussteigt. Wird zum Beispiel erst Zone 1, dann Zone 1 und 2 und danach nur noch Zone 2 durchdrungen, hat sich ein Objekt in das Fahrzeug hineinbewegt. Mit Hilfe einer weiteren Zone in Fahrzeugquerrichtung kann man beim Öffnen der Türe noch feststellen, ob sich etwas bereits auf dem Sitz des Fahrzeugs befindet, um danach aus den Einbeziehungsweise Aussteigevorgängen zu erkennen, ob es sich um eine Person handelt. Weiterhin können zusätzliche Zonen in Fahrzeuglängsrichtung installiert werden, die z.B. den inneren Türgriff überwachen.

Darüberhinaus ist es von Vorteil, dass der Prozessor der erfindungsgemäßen Vorrichtung mit einem Türschalter und/oder einem Gurtschloß und/oder einer Innenraumsensierung verbindbar ist und auch Signale von diesen Gegenständen für die Insassenklassifizierung verwendet. Dabei wird ein Sensorsignal vom Türschalter verwendet, ob die Tür geöffnet oder geschlossen ist, vom Gurtschloß, ob es eingesteckt ist oder nicht und von der Innenraumsensierung, welche Personen oder Objekte die Innenraumsensierung auf einem Fahrzeugsitz erkannt hat.

Weiterhin ist es von Vorteil, dass der bildgebende Sensor entweder in der A- und/oder in der B-Säule und/oder der Türschweller angeordnet ist. Beim Türschweller kann dies oben oder unten der Fall sein.

Die Insassenklassifizierung kann als Sitzmatte und/oder als ein weiterer bildgebender Sensor mit Ausrichtung auf ein Fahrzeug ausgebildet sein.

Der erfindungsgemäße erste bildgebende Sensor kann sowohl in horizontaler als auch in vertikaler Richtung angeordnet sein oder eine Kombination daraus. Eine Kombination in vertikaler und horizontaler Richtung hat insbesondere den Vorteil, der besseren Überwachung des Bereichs des Fahrzeugeinstiegs.

In vorteilhafter Weise wird aus dem Signal des ersten bildgebenden Sensors eine Bewegungsrichtung eines Objekts im Bereich des Fahrzeugeinstiegs beziehungsweise ein Abstand des Objekts zum ersten Sensor abgeleitet. Dies kann auch in Verbindung mit weiteren Daten geschehen, wie ob ein Fahrzeug geschlossen oder geöffnet ist und wie lange die Fahrzeugtür geöffnet oder geschlossen ist beziehungsweise ob ein Gurtschloß gesteckt ist oder wann das Gurtschloß gesteckt wurde, indem dieser Datensatz mit verschiedenen Szenariendatensätze verglichen wird, um so zu erkennen, ob eine Person oder ein Gegenstand sich auf dem Fahrzeugsitz vorzugsweise dem Beifahrersitz befindet.

### Zeichnung

Ausführungsbeispiele der Erfindung sind in der Zeichnung dargestellt und werden in der nachfolgenden Beschreibung näher erläutert. Es zeigen Figur 1 ein Blockschaltbild der erfindungsgemäßen Vorrichtung, Figur 2 verschiedene Zonen im Bereich des Fahrzeugeinstiegs und Figur 3 ein Flußdiagramm des erfindungsgemäßen Verfahrens.

### Beschreibung

Zukünftige Airbag-Generationen sollen laut amerikanischer Gesetzgebung FMVSS208 in Abhängigkeit von einer Person Kinder oder einem Kindersitz den Airbag gezielt abschalten beziehungsweise zünden. Eine Einführung ist in den kommenden Jahren vorgesehen. Hierzu werden Systeme benötigt, die eine erwachsene Person auf dem Beifahrersitz von einem Kindersitz unterscheiden können.

Erfindungsgemäß wird dies durch die Sensierung des Einsteigevorgangs durchgeführt, die eine Unterscheidung zwischen Kindersitzen und erwachsenen Personen ermöglicht, die völlig unabhängig von der Position der Person oder Position des Kindersitzes ist.

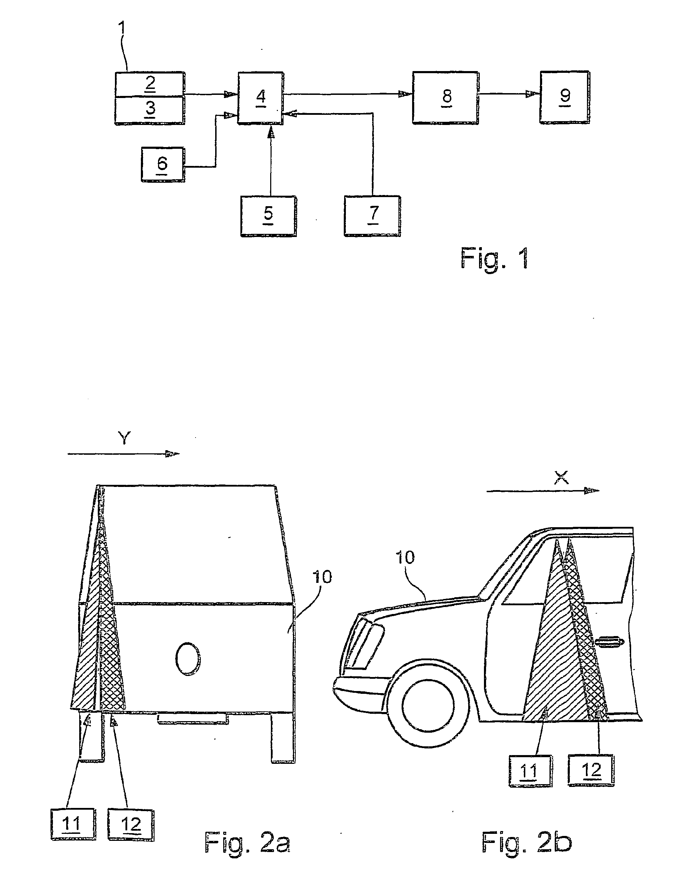

Figur 1 zeigt als Blockschaltbild die erfindungsgemäße Vorrichtung. Ein bildgebender Sensor, hier ein Ultraschallsensor, weist ein Sendeteil 2 und ein Empfangsteil 3 auf. Der Sensor 1 ist hier oben am Türschweller angebracht. Wie in Figur 2b zu sehen, überstreicht der Sensor 1 hier zwei Zonen 11 und 12. Es sind auch alternativ noch mehr Zonen möglich, die auch, hier in Fahrzeuglängsrichtung angeordnet sind, können aber auch in Fahrzeugquerrichtung wie in Figur 2a dargestellt, angeordnet sein. Neben einer Kombination aus einem Sendeteil 2 und dem Empfangsteil 3 sind auch ganze Felder von solchen Sensoren möglich, jedoch mindestens zwei, um die verschiedenen Zonen unabhängig voneinander zu überwachen. Alternativ ist es möglich, dass ein bildgebender Sensor eine Optik aufweist, die ein Abscannen der verschiedenen Zonen nacheinander, d.h. zyklisch, ermöglicht. Neben dem bereits erwähnten Ultraschallsensor sind auch Mikrowellensensoren mit einer schwachen Leistung, die eine Art Radar darstellen, Infrarotsensoren und Videosensoren möglich.

Das Ausgangssignal des Ultraschallsensors, das vom Empfangsteil 3 erzeugt wird, wird an einem Prozessor 4 übertragen, der aus dem Empfangssignal des Empfangsteils 3 berechnet, ob sich ein Objekt in den Zonen befindet oder nicht. Zusätzlich kann der Prozessor 4 die Bewegungsrichtung durch das Durchqueren der Zonen und die Abstände der Person zu dem Sensor berechnen. Damit ist beispielsweise eine minimale Größe der Person abschätzbar. Zusätzlich wertet der Sensor 4 Signale von einem Gurtschloßsensor 6, einem Türschaltersensor 5 und einer Innenraumsensierung 7 aus. Deren Signale verwendet der Prozessor 4, um die Insassenklassifizierung durchzuführen. Es ist möglich, dass entweder auf den Gurtschloßsensor 6 und/oder den Türschloßsensor 5 und/oder die Innenraumsensierung 7 verzichtet werden kann. Durch die Signale von dem Sensor 1 und den Sensoren 5, 6 und 7 ist es möglich, einen Datensatz zu bilden, der für ein bestimmtes Szenario für die Belegung des Fahrzeugsitzes paßt. Die sich daraus ergebende Insassenklassifizierung wird an ein Steuergerät 8 für Rückhaltemittel übertragen, das dann in Abhängigkeit von dieser Insassenklassifizierung Rückhaltemittel 9 ansteuert. Die Übertragung zwischen dem Prozessor 4 und dem Steuergerät 8 kann über einen Bus erfolgen, es ist jedoch auch möglich, hier eine digitale Schnittstelle zu verwenden. Neben dem Steuergerät 8 für Rückhaltemittel ist es auch möglich, dass weitere Steuergeräte, die von der Insassenklassifizierung profitieren können, mit den Daten von Prozessor 4 versorgt werden.

Figur 2 zeigt, wie oben bereits beschrieben, solche verschiedenen Zonen, die der Sensor 1 abdeckt. In Figur 2 sind solche Zonen in Fahrzeugquerrichtung, hier mit Y gekennzeichnet, beschrieben. Das Fahrzeug 10 weist zwei Zonen 11 und 12 auf, durch die das Objekt hindurchdringen muß, wenn der Fahrzeugeinstieg verwendet wird. In Figur 2b weist das Fahrzeug 10 zwei Zonen in Fahrzeugquerrichtung, die hier mit X gekennzeichnet sind, auf, die ebenfalls mit den Bezugszeichen 11 und 12 gekennzeichnet sind. Damit ist eine bessere Abdeckung des Fahrzeugeinstiegquerschnittes möglich.

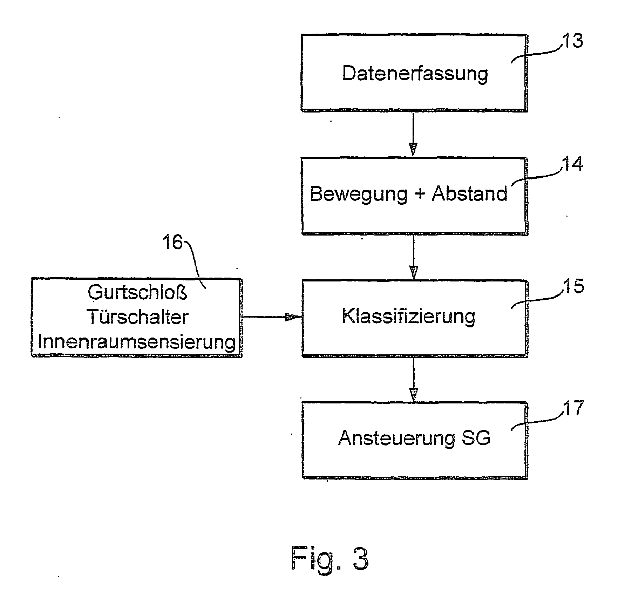

Figur 3 erläutert mittels eines Flußdiagramms das erfindungsgemäße Verfahren zur Insassenklassifizierung. In Verfahrensschritt 13 erfolgt die Datenerfassung des Sensors 1. Diese Daten werden dem Prozessor 4 wie oben dargestellt übermittelt. In Verfahrensschritt 14 berechnet der Prozessor 4 aus diesen Daten die Bewegung des Objekts und den Abstand zu den Sensoren. Damit kann ein Szenario für bestimmte Situationen bereits festgelegt werden. In Verfahrensschritt 15 erfolgt die Klassifizierung durch den Prozessor 4, der jedoch in Verfahrensschritt 16 dafür Daten vom Gurtschloßsensor und/oder vom Türschaltersensor und/oder von der Innenraumsensierung berücksichtigt. Die dadurch ermittelte Klassifizierung wird dann im Verfahrensschritt 17 an das Steuergerät 8 übertragen, das damit die Rückhaltemittel 9 ansteuert.

Im folgenden sind einige Beispiele aufgeführt, wie die Auswertelogik bei einem System mit zwei Zonen in Y-Richtung funktionieren könnte.

**Tabelle 1: System mit zwei Zonen in y-Richtung: Zeitlicher Verlauf der Aktivierung bei einem Einsteigevorgang (0: keine Aktivierung; 1:Aktivierung).**

| **Zeit** | **Zone1** | **Zone2** | **Ergebnis** |
|---|---|---|---|
| t1 | 0 | 0 | |
| t2 | 1 | 0 | |
| t3 | 1 | 1 | |
| t4 | 0 | 1 | Einsteigevorgang -> Person |
| t5 | 0 | 0 | Einsteigevorgang -> Person |

**Tabelle 2: System mit zwei Zonen in y-Richtung: Zeitlicher Verlauf der Aktivierung bei einem Aussteigevorgang (0: keine Aktivierung; 1:Aktivierung).**

| **Zeit** | **Zone1** | **Zone2** | **Ergebnis** |
|---|---|---|---|
| t1 | 0 | 0 | |
| t2 | 0 | 1 | |
| t3 | 1 | 1 | |
| t4 | 1 | 0 | Aussteigevorgang -> Person |
| t5 | 0 | 0 | Aussteigevorgang -> Person |

**Tabelle 3: System mit zwei Zonen in y-Richtung: Zeitlicher Verlauf der Aktivierung beim Reinsetzen eines Kindes in einen Kindersitz bzw. Montage eines Kindersitzes (0: keine Aktivierung; 1:Aktivierung).**

| **Zeit** | **Zone1** | **Zone2** | **Ergebnis** |
|---|---|---|---|
| t1 | 0 | 0 | |
| t2 | 1 | 0 | |
| t3 | 1 | 1 | |
| t4 | 1 | 0 | Reinbeugen -> Kindersitz |
| t5 | 0 | 0 | Reinbeugen -> Kindersitz |

Im folgenden sind weitere Tabellen angegeben, die ein System mit zwei Zonen in Y-Richtung in Kombination mit Informationen über Tür- und Gurtschloß beschreiben.

**Tabelle 4: System mit zwei Zonen in y-Richtung: Zeitlicher Verlauf der Aktivierung bei einem möglichen Einsteigevorgang (0: keine Aktivierung; 1:Aktivierung).**

| **Zeit** | **Zone1** | **Zone2** | **Tür auf** | **Gurtschloss gesteckt** | **Ergebnis** |
|---|---|---|---|---|---|
| t1 | 0 | 0 | 0 | 0 | |
| t2 | 0 | 0 | 1 | 0 | |
| t3 | 1 | 0 | 1 | 0 | |
| t4 | 1 | 1 | 1 | 0 | |
| t5 | 0 | 1 | 1 | 0 | |
| t6 | 0 | 0 | 1 | 0 | Einsteigevorgang -> Person |
| t7 | 0 | 0 | 0 | 0 | Einsteigevorgang -> Person |
| t8 | 0 | 0 | 0 | 1 | Einsteigevorgang -> Person |

**Tabelle 5: System mit zwei Zonen in y-Richtung: Zeitlicher Verlauf der Aktivierung bei einem möglichen Aussteigevorgang (0: keine Aktivierung; 1:Aktivierung).**

| **Zeit** | **Zone1** | **Zone2** | **Tür auf** | **Gurtschloss gesteckt** | **Ergebnis** |
|---|---|---|---|---|---|
| t1 | 0 | 0 | 0 | 1 | |
| t2 | 0 | 0 | 0 | 0 | |
| t3 | 0 | 0 | 1 | 0 | |
| t4 | 0 | 1 | 1 | 0 | |
| t5 | 1 | 1 | 1 | 0 | |
| t6 | 1 | 0 | 1 | 0 | Aussteigevorgang -> Person |
| t7 | 0 | 0 | 1 | 0 | Aussteigevorgang -> Person |
| t8 | 0 | 0 | 0 | 0 | Aussteigevorgang -> Person |

**Tabelle 6: System mit zwei Zonen in y-Richtung: Zeitlicher Verlauf der Aktivierung beim Reinsetzen eines Kindes in einen Kindersitz bzw. Montage eines Kindersitzes (0: keine Aktivierung; 1:Aktivierung).**

| **Zeit** | **Zone1** | **Zone2** | **Tür auf** | **Gurtschloss gesteckt** | **Ergebnis** |
|---|---|---|---|---|---|
| t1 | 0 | 0 | 0 | 0 | |
| t2 | 0 | 0 | 1 | 0 | |
| t3 | 1 | 0 | 1 | 0 | |
| t4 | 1 | 1 | 1 | 0 | |
| t5 | 1 | 1 | 1 | 1 | |
| t6 | 1 | 0 | 1 | 1 | Reinbeugen -> Kindersitz |
| t7 | 0 | 0 | 1 | 1 | Reinbeugen -> Kindersitz |
| t8 | 0 | 0 | 0 | 1 | Reinbeugen Kindersitz |

## Patentansprüche

1. Vorrichtung zur Insassenklassifizierung, wobei wenigstens ein erster bildgebender Sensor (1) einen Bereich überwacht und dass der erste Sensor (1) mit einem Prozessor (4) verbunden ist, der die Insassenklassifizierung durchführt, **dadurch gekennzeichnet, dass** der wenigstens eine Sensor (1) im Bereich eines Fahrzeugeinstiegs angeordnet ist und diesen Bereich überwacht.

2. Vorrichtung nach Anspruch 1, **dadurch gekennzeichnet, dass** der erste Sensor (1) als Video- und/oder als Ultraschall- und/oder Infrarot- und/oder Mikrowellensensor ausgebildet ist.

3. Vorrichtung nach Anspruch 1 oder 2, **dadurch gekennzeichnet, dass** der Bereich in wenigstens zwei Zonen (11, 12) aufgeteilt ist, die der erste Sensor (1) jeweils überwacht.

4. Vorrichtung nach einem der vorhergehenden Ansprüche, **dadurch gekennzeichnet, dass** der Prozessor (4) mit einem Türschalter (5) verbindbar ist und dass ein erstes Signal vom Türschalter (5) bei der Insassenklassifizierung berücksichtigt.

5. Vorrichtung nach einem der vorhergehenden Ansprüche, **dadurch gekennzeichnet, dass** der Sensor (1) in der A- und/oder B-Säule und/oder der Türschweller angeordnet ist.

6. Vorrichtung nach einem der vorhergehenden Ansprüche, **dadurch gekennzeichnet, dass** der Prozessor (4) mit einem Gurtschloß (6) verbindbar ist, wobei der Prozessor (4) ein zweites Signal vom Gurtschloß (6) bei der Insassenklassifizierung berücksichtigt.

7. Vorrichtung nach einem der vorhergehenden Ansprüche, **dadurch gekennzeichnet, dass** der Prozessor (4) mit einer Innenraumsensierung (7) verbindbar ist, wobei der Prozessor (4) ein drittes Signal von der Innenraumsensierung (7) bei der Insassenklassifizierung berücksichtigt.

8. Vorrichtung nach Anspruch 7, **dadurch gekennzeichnet, dass** die Innenraumsensierung (7) als Sitzmatte und/oder als ein zweiter bildgebender Sensor mit Ausrichtung auf einen Fahrzeugsitz ausgebildet ist.

9. Vorrichtung nach einem der vorhergehenden Ansprüche, **dadurch gekennzeichnet, dass** der erste Sensor (1) in vertikaler und/oder in horizontaler Richtung angeordnet ist.

10. Verfahren zur Insassenklassifizierung, wobei mit einem ersten bildgebenden Sensor (1), der im Bereich des Fahrzeugeinstiegs angeordnet ist, der Fahrzeugeinstieg überwacht wird und in Abhängigkeit von einem vierten Signal des Sensors (1) die Insassenklassifizierung durchgeführt wird.

11. Verfahren nach Anspruch 10, **dadurch gekennzeichnet, dass** aus dem vierten Signal eine Bewegungsrichtung eines Objekts im Bereich des Fahrzeugeinstiegs und/oder ein beabstandetes Objekt zum ersten Sensor (1) abgeleitet wird.

12. Verfahren nach Anspruch 10 oder 11, **dadurch gekennzeichnet, dass** das erste Signal vom Türschalter (5) und/oder das zweite Signal vom Gurtschloß (6) und/oder das dritte Signal von der Innenraumsensierung (7) bei der Insassenklassifizierung berücksichtigt wird.

13. Verfahren nach Anspruch 12, **dadurch gekennzeichnet, dass** aus dem zweiten Signal abgeleitet wird, ob eine Fahrzeugtür geschlossen oder geöffnet ist und/oder wie lange die Fahrzeugtür geöffnet oder geschlossen ist.

14. Verfahren nach Anspruch 12, **dadurch gekennzeichnet, dass** aus dem dritten Signal abgeleitet wird, ob das Gurtschloß (6) gesteckt ist und/oder wann das Gurtschloß gesteckt wurde.

## Claims

1. Device for classifying vehicle occupants, at least a first image-generating sensor (1) monitoring a region and the first sensor (1) being connected to a processor (4) which carries out the classification of vehicle occupants, **characterized in that** the at least one sensor (1) is arranged in the region of an entry to a vehicle and monitors this region.

2. Device according to Claim 1, **characterized in that** the first sensor (1) is embodied as a video sensor and/or as an ultrasonic sensor and/or infrared sensor and/or microwave sensor.

3. Device according to Claim 1 or 2, **characterized in that** the region is divided into at least two zones (11, 12) which are each monitored by the first sensor (1).

4. Device according to one of the preceding claims, **characterized in that** the processor (4) can be connected to a door switch (5), and **in that** a first signal from the door switch (5) is taken into account in the classification of vehicle occupants.

5. Device according to one of the preceding claims, **characterized in that** the sensor (1) is arranged in the A pillar and/or B pillar and/or the door sill.

6. Device according to one of the preceding claims, **characterized in that** the processor (4) can be connected to a belt lock (6), the processor (4) taking into account a second signal from the belt lock (6) in the classification of vehicle occupants.

7. Device according to one of the preceding claims, **characterized in that** the processor (4) can be connected to a passenger compartment sensing system (7), the processor (4) taking into account a third signal from the passenger compartment sensing system (7) in the classification of vehicle occupants.

8. Device according to Claim 7, **characterized in that** the passenger compartment sensing system (7) is embodied as a seat mat and/or as a second image-generating sensor which is aligned with a vehicle seat.

9. Device according to one of the preceding claims, **characterized in that** the first sensor (1) is arranged in a vertical direction and/or horizontal direction.

10. Method for classifying vehicle occupants, the entry to the vehicle being monitored with a first image-generating sensor (1) which is arranged in the region of the entry to the vehicle, and the classification of the vehicle occupants being carried out as a function of a fourth signal of the sensor (1).

11. Method according to Claim 10, **characterized in that** a direction of movement of an object in the region of the entry to the vehicle and/or an object at a distance from the first sensor (1) are derived from the fourth signal.

12. Method according to Claim 10 or 11, **characterized in that** the first signal from the door switch (5) and/or the second signal from the belt lock (6) and/or the third signal from the passenger compartment sensing system (7) is taken into account in the classification of the vehicle occupants.

13. Method according to Claim 12, **characterized in that** from the second signal it is derived whether a vehicle door is closed or opened and/or for how long the vehicle door is opened or closed.

14. Method according to Claim 12, **characterized in that** from the third signal it is derived whether the belt lock (6) is engaged and/or when the belt lock was engaged.

## Revendications

1. Dispositif de classification d'occupants, dont au moins un premier capteur (1) fournissant une image surveille une région, ce premier capteur (1) étant relié à un processeur (4) qui effectue la classification des occupants
**caractérisé en ce qu'**
l'au moins un, capteur (1) est disposé dans la région d'une entrée de véhicule, et contrôle cette région.

2. Dispositif selon la revendication 1,
**caractérisé en ce que**
le premier capteur (1) est un capteur vidéo et/ou un capteur à ultrasons et/ou à infrarouge et/ou à micro-ondes.

3. Dispositif selon la revendication 1 ou 2,
**caractérisé en ce que**
la région est divisée en au moins deux zones (11, 12) que le premier capteur (1) surveille respectivement.

4. Dispositif selon l'une des revendications précédentes,
**caractérisé en ce que**
le processeur (4) peut être relié à un contacteur de porte (5) et prend en compte un premier signal provenant du contacteur de porte (5) pour la classification des occupants.

5. Dispositif selon l'une des revendications précédentes,
**caractérisé en ce que**
le capteur (1) est disposé dans le montant A et/ ou B et/ou dans le seuil de porte.

6. Dispositif selon l'une des revendications précédentes,
**caractérisé en ce que**
le processeur (4) peut être relié à une attache de ceinture (6) et le processeur (4) prend en compte un deuxième signal provenant de l'attache de ceinture (6) pour la classification des occupants.

7. Dispositif selon l'une des revendications précédentes,
**caractérisé en ce que**
le processeur (4) peut être relié à un système de détection de l'habitacle (7) et le processeur (4) prend en compte un troisième signal provenant du système de détection de l'habitacle pour la classification des occupants.

8. Dispositif selon la revendication 7,
**caractérisé en ce que**
le système de détection de l'habitacle (7) est sous forme de coussin de siège et/ou de deuxième capteur fournissant une image avec orientation vers le siège du conducteur.

9. Dispositif selon l'une des revendications précédentes,
**caractérisé en ce que**
le premier capteur (1) est disposé en direction verticale et/ou horizontale.

10. Procédé de classification d'occupants,
**caractérisé en ce qu'**
on surveille l'entrée d'un véhicule au moyen d'un premier capteur fournissant une image (1), disposé dans la région d'entrée du véhicule et on effectue la classification des occupants en fonction d'un quatrième signal du capteur (1).

11. Procédé selon la revendication 10,
**caractérisé en ce que**
le quatrième signal permet de déterminer une direction de mouvement d'un objet dans la région d'entrée du véhicule et/ou un objet situé à distance du premier capteur (1).

12. Procédé selon la revendication 10 ou 11,
**caractérisé en ce que**
pour la classification des occupants, on prend en compte le premier signal provenant du contacteur de porte (5) et/ou le deuxième signal provenant de la fermeture de ceinture (6) et/ou le troisième signal provenant du système de détection de l'habitacle (7)

13. Procédé selon la revendication 12,
**caractérisé en ce que**
le deuxième signal permet de déterminer si une porte du véhicule est fermée ou ouverte et/ou dans quelle mesure la porte du véhicule est ouverte ou fermée.

14. Procédé selon la revendication 12,
**caractérisé en ce que**
le troisième signal permet de déterminer si la fermeture de ceinture (6) est attachée et/ou quand elle a été attachée.
